Europäisches Patentamt

European Patent Office

Office européen des brevets

(19)

(11) EP 0 657 842 B1

(12) **EUROPEAN PATENT SPECIFICATION**

(45) Date of publication and mention
of the grant of the patent:
**10.03.1999 Bulletin 1999/10**

(51) Int Cl.⁶: **G06K 11/14**

(21) Application number: **94119257.7**

(22) Date of filing: **06.12.1994**

(54) **Touch panel input device and method of generating input signals for an information processing device**

Berührungstafeleingabevorrichtung und Methode zur Erzeugung von Eingangsignalen für eine Informationverarbeitungsvorrichtung

Dispositif d'entrée à écran tactile et méthode de génération de signaux d'entrée pour un dispositif de traitement d'information

(84) Designated Contracting States:
**DE FR GB IT**

(30) Priority: **07.12.1993 JP 306834/93**
**23.05.1994 JP 108690/94**

(43) Date of publication of application:
**14.06.1995 Bulletin 1995/24**

(73) Proprietor: **SEIKO EPSON CORPORATION**
**Shinjuku-ku, Tokyo 163-0811 (JP)**

(72) Inventors:
• **Takahashi, Eizo, c/o Seiko Epson Corporation**
**Suwa-shi, Nagano-ken, 392 (JP)**

• **Kaburagi, Chiharu, c/o Seiko Epson Corporation**
**Suwa-shi, Nagano-ken, 392 (JP)**

(74) Representative: **Hoffmann, Eckart, Dipl.-Ing.**
**Patentanwalt,**
**Bahnhofstrasse 103**
**82166 Gräfelfing (DE)**

(56) References cited:
**WO-A-92/09058**        **US-E- R E33 151**

• **PATENT ABSTRACTS OF JAPAN vol. 13, no. 291**
**(P-893)6 July 1989 & JP-A-01 073 414 (WACOM)**
**17 March 1989**

## Description

This invention relates to touch panel input devices.

An example of a prior art touch panel input device is an ultrasonic wave touch panel input device, such as that disclosed in WO-A-9209058, JP-A-61-239322, US-A-4,700,176 and US-A-4,746,914, which will be described with reference to Fig. 14.

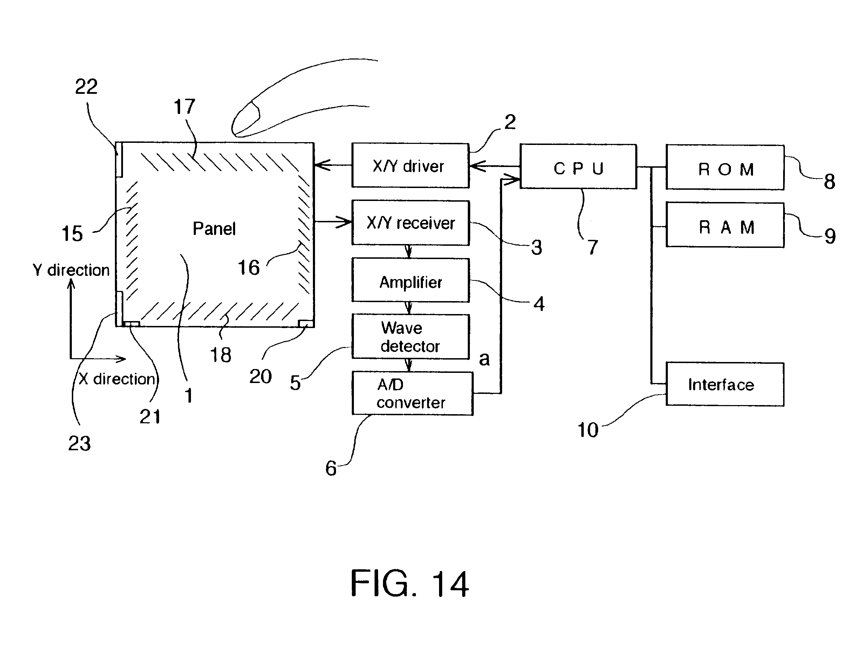

The device illustrated in Fig. 14 comprises a touch panel 1 and an associated circuitry used to identify the coordinates of a touch position on the panel and to output signals representing these coordinates as well as the touch pressure. The touch panel comprises a substrate having a surface capable of propagating surface acoustic waves (SAW). Two pairs of input transducer 20 (22) and output transducer 21 (23) are mounted on the surface, at the positions shown in the drawing. Reflector units 15 to 18 each comprising an array of reflective elements are provided along the peripheral edges of the surface as shown.

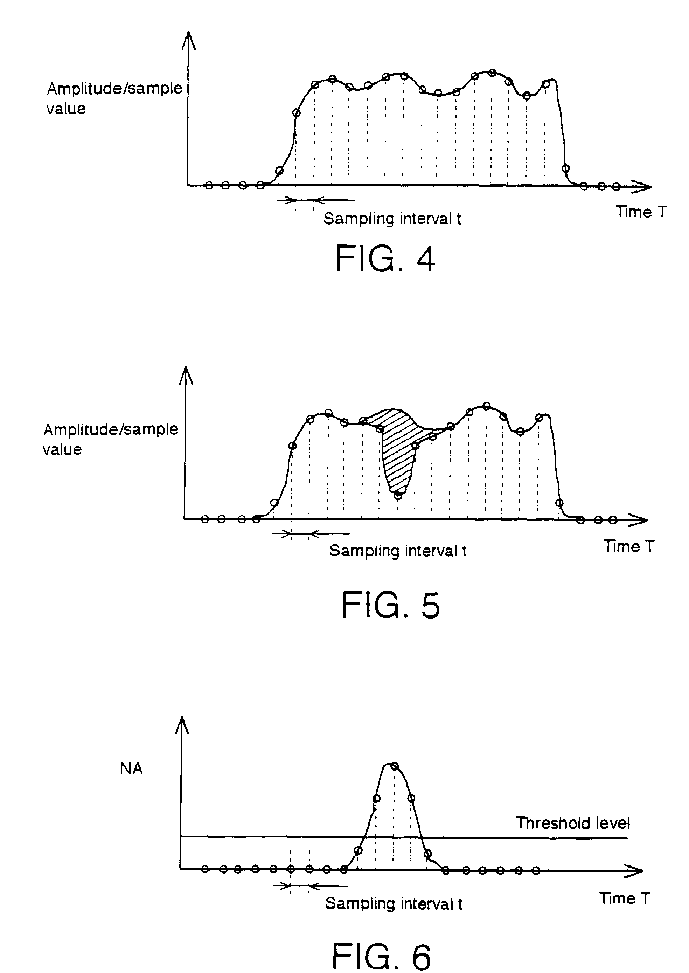

Touch position detection of this touch panel input device in the X direction of the orthogonal X,Y coordinate system shown in Fig. 14 will be explained using the control block diagram shown in Fig. 14. CPU 7 activates X/Y driver 2 which then electrically generates electrical wave bursts. The wave bursts are alternately applied to the Y input transducer 21 and the X input transducer 22. Since the following explanation concentrates on the detection in the X direction, only the X input transducer 22 will be considered. The electrical vibrations are converted into mechanical vibrations by the X input transducer 22, and SAWs are sent to the reflector unit 17. The transmitted SAWs possess rectilinear propagation characteristics and thus advance along a roughly linear path. An SAW reaching the first reflective element of reflector unit 17 is partially reflected, while the remainder passes through the element. The reflected wave component is deflected by 90°. In the same manner a respective wave component is branched off and deflected at each of the second to last reflective elements of reflector unit 17. The deflected wave components traverse the panel surface in the Y-direction thereby reaching respective reflective elements of reflector unit 18 by which they are again deflected by 90° to propagate in the X direction toward X output transducer 23. The individual wave components reach output transducer 23 with time differences proportional to differences in path length of their respective routes. Each SAW of the wave burst will be divided in this way into a plurality of wave components and components of each wave will be reflected twice and go through the same route, respectively. Finally the wave components are received by X-output transducer 23. The mechanical vibrations received by output transducer 23 are converted to electrical vibrations which are applied to X/Y receiver 3. The electrical vibrations received by X/Y receiver 3 are then amplified by amplifier 4 and are detected by wave detector 5. In this way, the electrical vibrations output by X output transducer 23 in response to a wave burst are converted to the waveform shown in a solid line in Fig. 4. This waveform is sampled and quantized by A/D converter 6 and the quantized samples are stored, via CPU 7, in RAM 9.

Fig. 4 shows the waveform received when no touch input is being received. In the figure, the horizontal axis shows the time and the vertical axis represents the amplitude of the received analog signal or the magnitude of the quantized samples indicated by circles in the figure. The distribution of magnitudes of the samples shown results from the fact that the time taken by individual wave components differs depending on the path length of the route a wave component takes between the input transducer and the output transducer. Fig. 5 shows the waveform received when a touch input is being received. Because the SAW components passing through the touched spot on the panel are attenuated due to absorption by the object that touched the panel, the level of that portion of the received signal that represents wave components corresponding to the route passing through the touched spot will be smaller.

To determine the position of a touched spot the prior art stores the signal samples obtained when no touch input is being received as reference samples in RAM 9, and calculates the differences between these reference samples and the corresponding signal samples obtained when a touch input is being received. The position at which the panel was touched can be calculated from the point of time at which the respective difference, i.e., the magnitude of attenuation in the received signal becomes the largest, i.e. using a peak detection method. Determination of this position is the more accurate the shorter the sampling interval is. Alternatively, zero-cross can be detected by differentiating the waveform received. The above explanation concerns positional detection in the X direction. By performing similar detection in the Y direction, it is possible to determine the X and Y coordinates of the position at which the panel was touched. Here, the basic resolution of a touch panel input device greatly depends on the sampling interval, and can be expressed by Equation (1), where t is the sampling interval and $v$ is the propagation velocity:

$$\text{Resolution} = t \times v/2 \qquad (1)$$

Furthermore, taking into account sampling errors, the actual resolution can be expressed by Equation (2):

$$\text{Resolution} = t \times v \qquad (2)$$

In the prior art explained above, the average between the SAW attenuation detected in the X and Y directions is treated as detection value in a Z direction (perpendicular to both the X and the Y direction) to represent the touch pressure at the touched position.

The stronger the touch pressure is the wider becomes the area of a touched spot and the more likely it becomes that the received signal does not exhibit a clear maximum attenuation value. Instead, the attenuation gets saturated and a flattened attenuation peak results. Under such conditions it is not possible to accurately determine the touch position by means of the peak detection method. Furthermore, any noise peak superimposed to the flattened attenuation peak tends to be misinterpreted as the attenuation peak leading to incorrect detection results. The latter problem is solved in WO-A-9209058 by filtering out all the attenuation peaks which are lower than a predetermined threshold. For the same reason it was difficult to use a pen having a felt tip or the like as a contact object or pointing device, since, due to the flat contact surface of the tip of such pen, a peak attenuation value is hardly obtained.

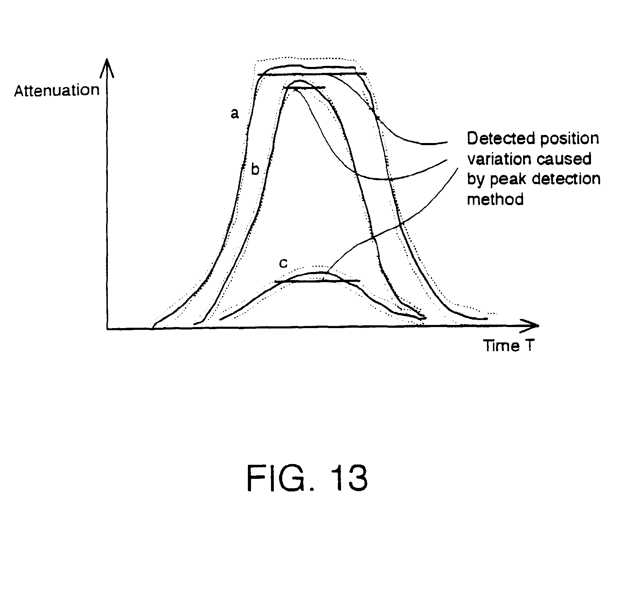

Furthermore, as mentioned above, in the conventional device, the position detection resolution of the touch panel is greatly affected by the sampling interval (t) used for A/D converting the received signals and by overlapping noise. This will be explained with reference to Fig. 13. This figure shows the difference between the waveform when the panel is not being touched and that when the panel is being touched. In other words, the waveform shown in Fig. 13 represents the attenuation caused by touching the panel with a contact object. a, b, and c indicate attenuation waveforms for different widths of the touched area. In the figure, the broken lines indicate the variation in the attenuation waveform caused by noise, and the bold lines indicate the width of variation in the detected positions when the peak detection method is used to detect the touched positions. If resolution is defined as the variation in the detected positions, the lengths of the bold lines indicate resolutions. As can be seen in Fig. 13, the peak value becomes saturated when the touch width, i.e., the width of the area touched is wide, as indicated by waveform a, resulting in inferior resolution when the peak detection method is used for position detection. Furthermore, a sharp attenuation waveform cannot be obtained even when the touch width is narrow, as indicated by waveform b, again resulting in inferior resolution. As can be seen, a problem exists in methods that regard the peak position as the touched position, i.e., the touched position cannot be accurately determined. Furthermore, if noise components exist in the received signal waveform, resolution cannot be improved even if sampling interval t is shortened.

The document US-A-4,700,176 mentioned above discloses an alternative way of detecting the touch position from the signal received from the output transducer. In this case the detected (rectified) signal from wave detector 5 is differentiated and the zero-crossing of the differentiated signal is detected as corresponding to the touched position. As mentioned in the document itself this detection method is vulnerable to interpreting noise components in the signal as a "touch". Thus, this detection method is no more reliable than the peak detection method.

The prior art touch panel input devices are intended to be used as "pointing devices", i.e, it is detected, for instance, whether, and if so which, one of plural points offered for selection by a computer display screen disposed behind the panel has been touched, for instance by a finger. While for this purpose ("finger input" or "pointing input") the accuracy in position detection achieved by the methods explained above may be sufficient, it is not sufficient where the touch panel input device is to be used for "pen input" ("line input"), i.e. for drawing characters, symbols or graphic figures. In this case lines of contiguous points on the panel are touched by moving a contacting object on the panel surface. In this case the touch pressure will hardly be constant and the width of the touched positions will fluctuate correspondingly. As will be understood from the foregoing, this fluctuating touch width affects the accuracy of position detection. On the other hand, where for instance a character is drawn on the panel the shape and position of lines making up the character must be exactly detected to allow data to be derived from the panel that are suitable for being processed by an information processing device for display of the character on a screen or printing it by means of a printer. In other words, "pen input", as defined herein, to a touch panel input device requires a much higher accuracy of position detection than just "finger input".

The invention was developed in order to solve these problems, and its objective is to provide a touch panel input device that offers a high accuracy of touch position detection to allow stable pen input in addition to finger input. Another objective of the invention is to reduce the adverse effects of noise components of received signal waveforms on the resolution, and to achieve a resolution that is higher than the sampling interval t.

This objective is achieved with a touch panel input device as claimed in claim 1 and a method as claimed in claim 12, respectively. The preambles of claims 1 and 12 are known from WO-A-9209058.

According to a preferred embodiment of the invention, when a pen that carries a quick-drying liquid ink is used, the liquid ink is momentarily placed on the panel, which causes attenuation of the SAWs passing over the panel. The SAWs are attenuated by a soft material that touches the panel, as well as by this liquid. As will be understood, such ink may be used to enhance SAW attenuation and/or if it is desired to mark the positions that have been touched. Because of the attenuation of the wave components passing through the spot where the liquid ink is applied, the waveform obtained by the X/Y receiver will show attenuation at a position that corresponds to the point at which the liquid ink was applied.

When the pen is subsequently moved, the solvent of the ink that was previously applied evaporates, and thus no longer causes attenuation of the wave components. When a colored quick-drying ink is used, the pigments adhere to the panel surface. However, because they are thin, and the grain size of the pigment itself is small, SAW attenuation is not observed. Use of the ink reduces or avoids large fluctuations of the touch width. In this way, an even more stable pen input can be obtained using a pen based on a quick-drying liquid ink.

According to a preferred embodiment of the invention the degree of attenuation is determined based on differences between the reference samples obtained when the panel is not being touched, and the samples obtained when the panel is being touched, these differences being normalized to the reference samples. By comparing such normalized attenuations with a certain threshold level, accuracy in determining touch position and width is further improved and less dependent on noise. Thus, the detected touch width can for instance be used to change operation modes, e.g., by using pointing devices of different widths and making a first width correspond to an input mode, and a second width to a deletion mode.

The invention will be explained in more detail below with reference to the drawings which illustrate specific embodiments only and in which:

Fig. 1    is a circuit block diagram showing a first embodiment of the invention;

Fig. 2    is a functional block diagram of the first embodiment of the invention;

Fig. 3    is a functional block diagram of a touch width detector;

Fig. 4    is a graph showing the waveform resulting from the sampling of the received waveform when the panel is not being touched;

Fig. 5    is a graph showing the waveform resulting from the sampling of the received waveform when the panel is being touched;

Fig. 6    is a graph showing the normalized attenuation;

Fig. 7    is a magnification of part of Fig.6;

Fig. 8    is a graph similar to Fig. 7, used to explain selection of sampling points;

Fig. 9    is a graph illustrating linear interpolation as employed according to an embodiment of the invention;

Fig. 10   is a diagram showing an electronic blackboard and a block diagram embodying the present invention;

Fig. 11   is a configuration diagram showing another embodiment of the invention;

Fig. 12   is a configuration diagram showing still another embodiment of the invention;

Fig. 13   is a graph showing variations in the positions detected using a conventional position detection method; and

Fig. 14   is a block diagram showing an example of prior art.

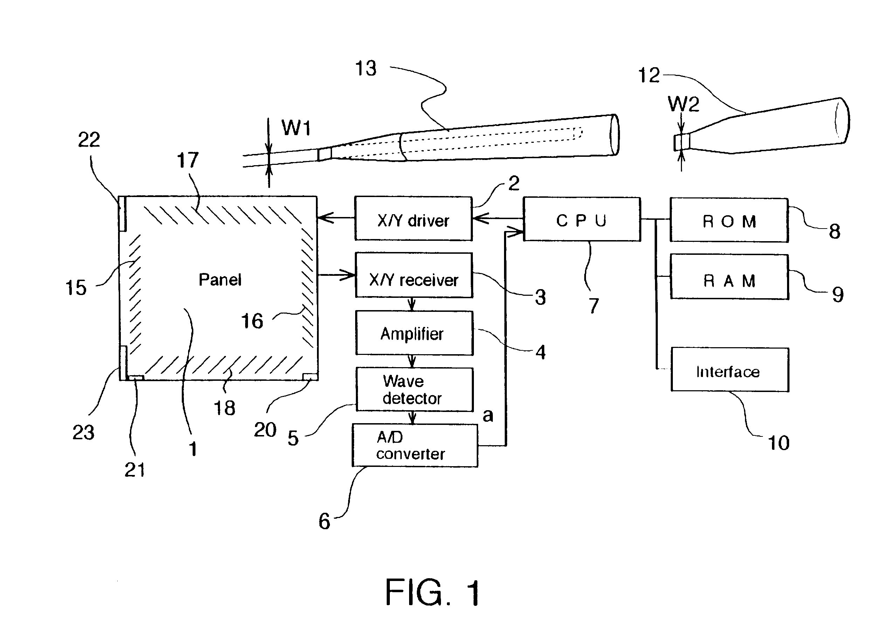

Fig. 1 shows the block diagram of the touch panel input device of the first embodiment of the invention. The same numerals in Fig. 1 designate the same components as in the Fig. 14. Since the basic structure and acquisition of samples of this embodiment are similar to those explained above with respect to Fig. 14 the following description will focus on the differences.

In the waveform having an attenuation part in Fig. 5, the shaded area indicates the degree of attenuation relative to the waveform of Fig. 4. The waveform shown in Fig. 6 represents the attenuation envelope, i. e. the envelope of a normalized attenuation at each sampling point. "Normalized attenuation" at a particular sample point means the difference between a pair of corresponding samples in Figs. 4 and 5 divided by the reference sample, i.e., that of the waveform shown in Fig. 4. The length between the points where the attenuation envelope crosses a threshold level is defined as the "attenuation width". Because this attenuation width is based on a constant threshold level, it becomes possible to stably detect the touch width. Based on Fig. 6, the point on the time axis at which the attenuation envelope has its maximum, is detected as the one representing the touched position. This point as well as the attenuation width are calculated for both the X direction and the Y direction. The resulting data are then sent via communication means such as an interface 10 to a host device, e.g. a computer (PC) (not shown in Fig. 1)..

Next, an explanation of an application example using the above system will be provided. In this embodiment, at least two pens 12 and 13 are used and the pens have writing tips of different thickness, resulting in correspondingly different touch widths in the X and Y directions on the panel. The writing tip of at least one of the pens is preferably made of felt or the like and soaked with a quick-drying ink or the like for enhancing the attenuation property and/or marking the trace of touched positions on the panel. One or both of the pens, in particular that one having the greater thickness, may be a rubber stick which has an elastic tip. Foam rubber is particularly suitable because of its SAW absorption characteristics. In order to allow a smooth movement of the pens on the panel surface care should be taken to have the coefficient of friction between a pen and the panel surface sufficiently low. To that end, foam rubber and other materials having a relatively high coefficient of friction may for instance be provided with an anti-friction coating on the contacting surface. Incidentally, where the ink is used as mentioned above, it has an additional advantage by acting as a kind of lubricant substantially reducing the friction. While a finger may generally be used for "pen input" it may not be very suitable where the coefficient of friction is too high.

Assuming that the thickness of the pen tips are W1 and W2 in the relation of W1 < W2, pen 12 having the thickness W2 may be used as a deletion pen and pen 13 as a drawing pen, for example. Assuming that pen 13 has its writing tip soaked with quick-drying ink, when the tip is traced on the panel, ink of substantially width W1 is applied to the panel 1. At the instant when pen 13 applies the ink to the panel 1, the SAW components passing through this area become attenuated. The ink then evaporates from the panel, thus stopping this attenuation. When pen 13 is used to draw a character or a graphics figure, CPU 7 detects that the touch width on panel 1 is W1 and judges that the mode being used is the input mode. When touch input is made onto panel 1 by means of the deletion pen 12, the CPU detects that the touch width on panel 1 is W2, and judges the mode is an erasing mode so that information that was inputted by means of deletion pen 12 can be erased. In this way, it is possible to change operation modes through the detection of the attenuation width. It is needless to say, that the correspondence between the attenuation widths and the thicknesses of the tips (touch widths) is preset in ROM 8 which also stores the program data for the CPU 7.

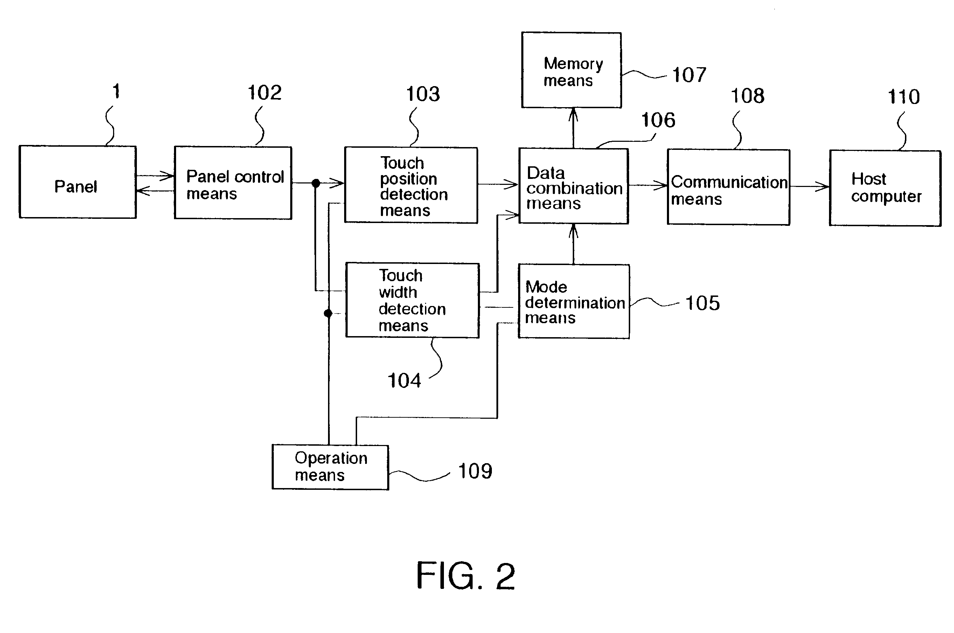

Fig. 2 is a functional diagram showing the connections of the functions explained above. 102 designates a panel control means for inputting SAWs to and receiving them from the panel 1. 103 designates a touch position detection means. 104 designates a touch width detection means which detects the attenuation width. 105 designates an input mode determination means which determines the input mode based on the detected attenuation width. 106 designates a data combination means which combines the position data and mode data and stores the data into a memory means 107 and outputs the data in response to the requirement of a host device 110 via a communication means 108. 109 designates an operation means which controls the above functions of width detection, position detection and mode determination in conjunction with the respective function means.

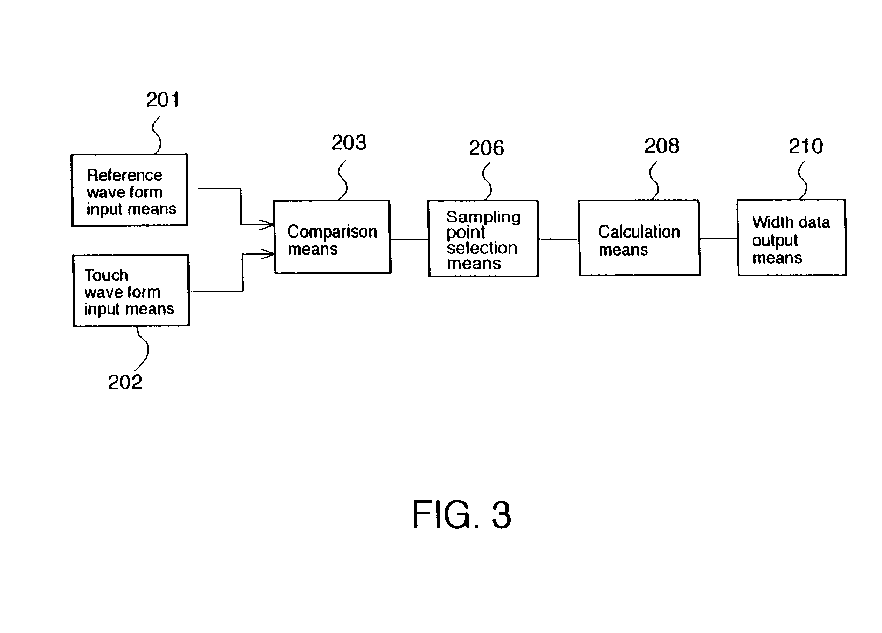

Further details on the method of processing detected data are explained below. Fig. 3 shows a more detailed block diagram of the width detection means 104. 201 designates reference waveform input means which obtains reference waveform data by utilizing the input/output transducers when no touch is being executed, e.g. right after a power source is switched on. 202 designates touch waveform input means which obtains corresponding data when the touch panel 1 is waiting for and/or receiving touch input. Data acquisition by means of these input means is the same as described before and further details are omitted here. The quantized samples obtained from input means 201 and 202 are stored in respective areas of RAM 9. Comparison means 203 processes the data stored in the RAM 9 in the manner explained above to obtain for each pair of samples the respective normalized attenuation. 206 designates a sampling point selection means which selects sampling points for accurately determining the attenuation width by a method explained below. 208 designates a calculation means which calculates data of crossing points of the attenuation envelope with the threshold level line by a method also explained below. 210 designates a width data output means which outputs the attenuation width data to a next processing means.

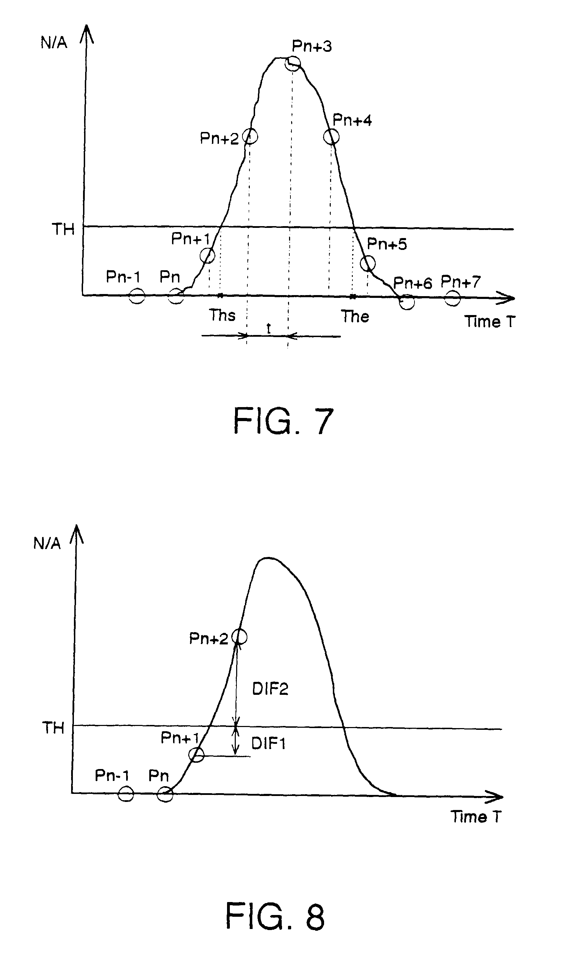

Fig. 7 shows a magnified version of part of Fig. 6. Pn-1, Pn, Pn+1, ... Pn + 7 in Fig. 7 denote the sampling points of the attenuation envelope, i.e. the points at which the normalized attenuation has been calculated in the above described manner. Threshold level TH is set against these sampling points, and if any of the sampling points is above the threshold level TH, it can be judged that SAW attenuation has occurred. Ordinarily, threshold level TH is set to be higher than the level of the noise that overlaps the received signal waveform. When such sampling point has been detected, and it is judged that the panel has been touched, sampling point selection means 206 is used to determine the sampling points which are to be applied to the calculation means 208. That is, selection means 206 selects from the sampling points shown in Fig. 7, three successive sampling points near threshold level TH, on the rising edge of the attenuation envelope. Similarly, three successive sampling points are selected on the falling edge. For the three sampling points, two adjacent points that flank threshold level TH, and a third point adjacent to one of these two points are selected. The method of selecting this third point is explained in detail below.

First, the calculation described below is performed on the sampling points that flank threshold level TH. Fig. 8 explains how calculation is performed on the rising edge of Fig. 7. Pn+1 and Pn+2, which flank the threshold level, are selected as shown in Fig. 8. Next, the following comparisons are made for the normalized attenuations at these points.

$$DIF1 = TH - NA(Pn+1) \qquad (3)$$

$$DIF2 = NA(Pn+2) - TH \qquad (4)$$

where NA(PxI indicates the normalized attenuation at sampling point Px. When DIF1 ≥ DIF2, i.e., when the NA (Pn+2) is closer to threshold level TH than NA(Pn+1), Pn+3 which is adjacent to Pn + 2 is selected as the third sampling point. Therefore, the normalized attenuations to be sent to the calculation means will be those at Pn+1, Pn + 2, and Pn + 3. Next, when DIF1 < DIF2, i.e., when NA(Pn+1) is closer to threshold level TH than NA(Pn+2), Pn which is adjacent to Pn + is selected as the third sampling point. Therefore, normalized attenuations to be applied to the calculation means will be those at Pn, Pn + and Pn + 2. If there is a sampling point at which the normalized attenuation equals the threshold level TH, that point and the points before and after that point will be relayed to the calculation means 208. The same selection procedure is performed for the falling edge.

Using a total of six points, i.e., the three points of the rising edge and the three points of the falling edge that are selected in the manner described above, calculation means 208 computes times Ths and The, at which the rising edge and the falling edge, respectively, cross the threshold level TH. To that end calculation means 208 first transforms the coordinates of the six selected sampling points as follows. That is, each sampling interval t on the time axis is divided into M segments of equal size, according to the required time axis resolution (it will be appreciated the distance between two adjacent sampling points on the time axis equals t). In addition, the time coordinates of the sampling points (in units of t/M) are taken relative to that of the first sampling point, i.e that of the first sampling point is arbitrarily set to zero.

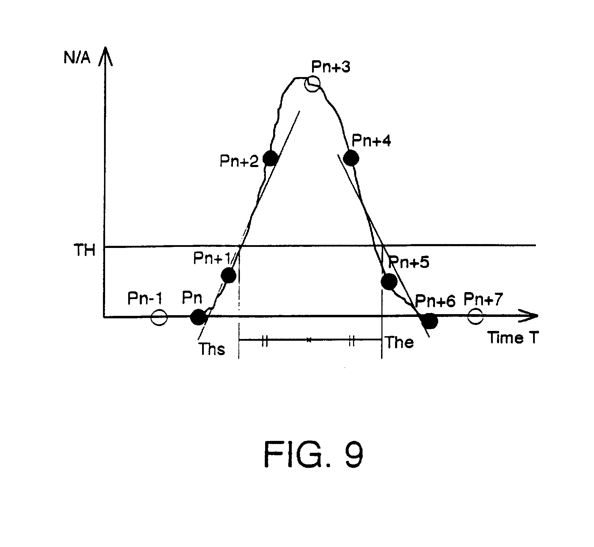

As a result, the coordinates of the three points, used for obtaining time Ths related to the rising edge, will be transformed to (0, NA(Pn)), (M, NA(Pn+1)), and (2M, NA(Pn+2)). Subsequent computations will be explained in further detail using Fig. 9. When the three points on the rising edge indicated by black dots are selected by selection means 206 in the manner described above, and linear interpolation using the least square approximation method is performed using these three points, the time at which the NA value matches the threshold level TH can be obtained, from the approximated linear function, as a number between 0 and 2t with a resolution of t/M. By determining Ths and The in this manner, it is possible to obtain a time resolution that is finer than the sampling interval t, i.e. t/M. By treating the mid-point between Ths and The determined in this way as the touched position, it is possible to accurately determine the linear position in the X and Y direction of the panel. The positional resolution obtained in this manner can be expressed by Equation (5).

$$\text{Resolution} = t \times v/2M \qquad (5)$$

By performing this operation in both the X and Y directions, it is possible to accurately determine the two-dimensional coordinates of the touch position or the center of the touch position on the panel. These coordinates are sent via communication means 10 to the host 110.

In the preferred embodiment of the invention explained above the attenuation width is detected and used for operation mode switching. It is to be noted that the advantage of a high accuracy of position detection such as to allow pen input may be achieved without making use of the width detection and operation mode switching. Where the attenuation width is detected it may also be used for a purpose other than operation mode switching. The position detection according to the present invention detects the center of a touch position. When a line is drawn on the touch panel by a pen the positions of contiguous points making up the line will result from the position detection. The detected attenuation width may be used to derive additional data representing the width of the line. In this way, lines of different widths can be input into an information processing system as may be required for graphic drawings. Operation mode switching and line width input may be combined by having the operation mode switching responsive to certain threshold widths. Between the threshold widths the touch width may be varied for line width input.

Further, while in the preferred embodiment of the invention signal processing is in the digital domain based on quantized samples of received analog signals, as will be appreciated by those of ordinary skill in the art, it is generally possible to implement the invention by analog signal processing not requiring sampling and quantizing. Also, while normalized attenuations are preferably used for comparison with a fixed threshold level to eliminate an influence of fluctuations of absolute amplitude values on the detection results, a similar advantage may be achieved by comparing the signal differences representing unnormalized attenuations with a threshold level adaptively adjusted in response to an average of the reference samples. An adaptively adjusted threshold level may be preferable for an analog implementation of the invention.

The touch panel input device and the method according to the present invention have a wide field of application. Particular advantages are achieved by employing the present invention as input means of an information processing device like an electronic blackboard, an overhead projector etc. as will be explained in the following.

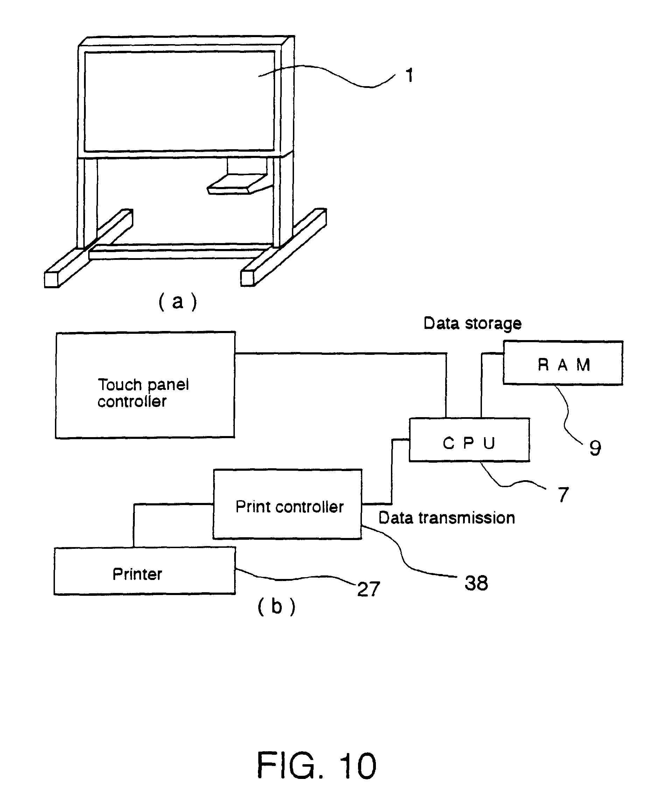

Fig. 10 (a) shows an embodiment in which the principle of the invention is applied to an electronic blackboard, and Fig.10 (b) is a block diagram showing its internal controller. The embodiment in Figs. 10 (a) and (b) uses pens 12 and 13 shown in Fig. 1, and pen 13, which applies a quick-drying colored liquid ink, is used to draw letters or graphic figures directly on panel 1. In the touch panel input device of this embodiment, the ink applied to panel 1 is used for detecting the position and width of SAW attenuation, as well as the pen's touching and detaching (which indicates that the pen has left the panel surface). The resulting data is then stored.

In this way, using no display device other than a panel, the data drawn can be visually verified by the user and can be stored as data at the same time. If a mistake was made, deletion pen 12, which is wider than pen 13, can be used to erase the letters or graphic lines that were drawn on the panel. The corresponding data stored internally will be deleted at the same time. To copy the letters or graphic figures drawn on a panel, a conventional electronic blackboard must use a scanner to read the letters or graphic figures on the panel. Consequently, a scanner drive which moves scanner, and a screen rotation mechanism for moving the panel are required, as is well known to those of ordinary skill in the art.

However, in the electronic blackboard embodying the invention as shown in Fig. 10, the data will have already been fetched, and thus can be directly transferred to print controller 38, allowing fast printing. Furthermore, this electronic blackboard does not require a scanner, a scanner drive, or a screen rotation mechanism.

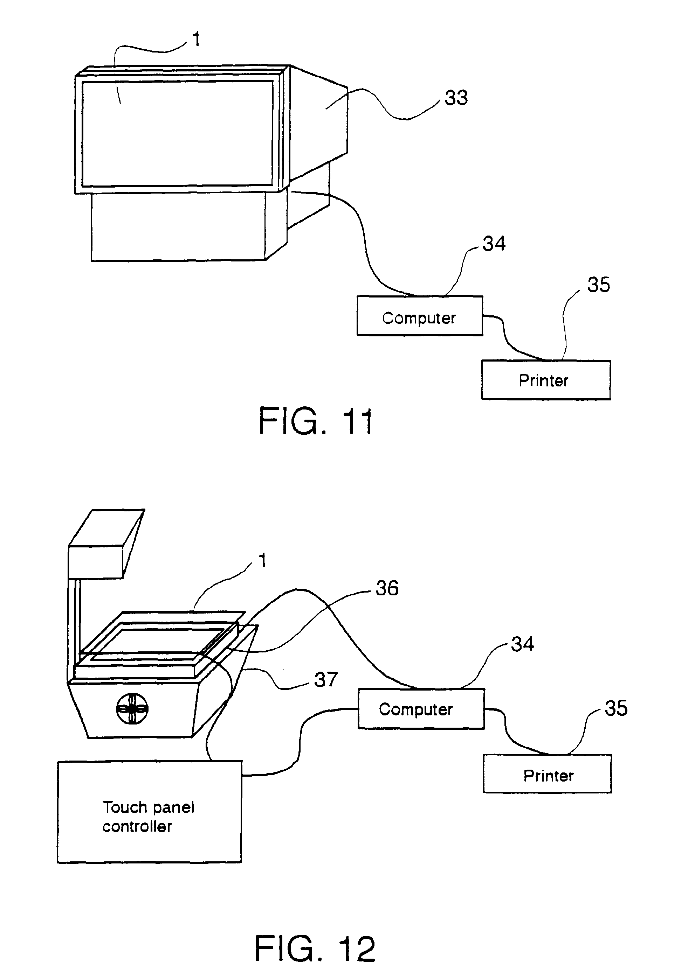

Fig. 11 shows the invention applied to a system comprising a monitor 33, on which a transparent touch panel like panel 1 of Fig. 1 is installed, a computer 34, and a printer 35. A clear, transparent quick-drying ink is used for pen 13 of this system. To compensate, an object drawn by the user is drawn by computer 34 on the screen of monitor 33 located in the back of panel 1, thus displaying the object that is actually being drawn. Letters or graphic figures that are displayed may also be output to printer 35. In this embodiment, since input to the touch panel is reflected on the screen of the monitor colorless ink which leaves no visible trace on the panel is preferably employed or no ink used at all.

Fig. 12 shows an embodiment in which the invention is applied to an overhead projector (OHP) 37. In Fig. 12, OHP display device 36 is placed on OHP 37, and touch panel 1 is placed on OHP display device 36. When making a presentation, computer 34 is used to display information on OHP display device 36, and a pen is used to add comments on panel 1. It is possible to have computer 34 read the area to which comments have been added. This result is displayed over the information displayed on OHP display device 36, and may also be output to printer 35.

As explained above, by using a pen containing a quick-drying liquid ink, the invention enables pen input in addition to finger input for touch panels based on the SAW method. Furthermore, the invention possesses an advantage in that it enables changes in operation mode, based on touch width detection. Consider, for example, input and deletion modes. Through the use of input devices, i.e., an input pen and a deletion pen, the simple operations of drawing and deletion become direct computer input, thus improving user interface.

Furthermore, by reducing the effects of noise and sampling errors, the invention makes it possible to obtain a resolution that is higher than that equivalent to the sampling interval. Additionally, the invention enables pen input for surface acoustic wave-type touch panel input devices, and eliminates the need for the increases in the capacity of the means of storage, that would be required when shortening sampling intervals in order to improve resolution.

## Claims

1. A touch panel input device comprising:

   a panel (1) having a surface capable of propagating surface acoustic waves, such that a touch of the surface by a touch input device (12, 13) causes perturbation in the form of at least a partial absorption of energy of a surface wave propagating through the region of the touch,
   surface acoustic wave scanning means (7, 2, 20, 22) for scanning said surface with a timed succession of surface waves directed along parallel paths across said surface in at least one predetermined first direction,
   receiving means (3-6, 21, 23) for receiving said surface waves after having crossed said surface and for converting the received waves into an electrical signal whose amplitude variation represents the energy absorption state along each of said parallel paths,
   signal processing means (7-9) for detecting the position of a touch of said surface in a second direction substantially perpendicular to said first direction, based on said amplitude variation signal,
   the signal processing means (7-9) including comparison means (203) for deriving, as an attenuation waveform, the amplitude difference between a reference electric signal obtained from said receiving means (3-6, 21, 23) when the panel (1) is not touched and the electric signal obtained from said receiving means when the panel is touched, and
   threshold means for comparing said attenuation waveform with a predetermined threshold level,

   characterized in that said signal processing means further includes:

   intersection detection means responsive to said threshold means for detecting intersections between said attenuation waveform and said threshold level, and
   means responsive to said intersection detection means for calculating a point of time intermediate between said intersections as being representative of said position of a touch.

2. The device of claim 1, wherein said receiving means comprises sampling means (6) for sampling said electrical signal at equidistant sampling points to obtain a sequence of samples each representing the energy absorption state at a respective one of said paths.

3. The device of claim 2 further comprising means (6) for converting each sample into a digital value.

4. The device of any one of claims 1 to 3 further comprising:

   linearization means (206, 208) for linearizing those parts of said attenuation waveform intersecting said threshold level, wherein said point of time is calculated based on the intersections between said linearized attenuation waveform and said threshold level.

5. The device of claim 4 in combination with claim 2 or 3, wherein said comparison means (203) is adapted to calculate, as said attenuation waveform, for each of said sampling points the difference between a reference sample obtained from said receiving means when the panel (1) is not touched and the corresponding sample obtained from said receiving means when the panel is touched, to obtain a sequence of attenuation values.

6. The device of claim 5, wherein said comparison means (203) is adapted to calculate a sequence of normalized attenuation values by forming for each sampling point the difference between the sample and the corresponding reference sample and dividing the difference by the reference sample.

7. The device of claim 5 or 6, wherein said linearization means comprises

   means (206) for comparing each of said attenuation values with said threshold level, means (206) for finding at least two groups of three successive sampling points, each group including a pair of successive sampling points of which the attenuation value at one sampling point is smaller and that at the other is greater than said threshold level, and means (208) for calculating, based on the attenuation values corresponding to each of said groups of sampling points, respective approximation curve segments.

8. The device of claim 7, wherein the sampling point next to that one of said pair of sampling points at which said attenuation value is nearer to the threshold level than that of the other of the pair is selected as the third sampling point in a group.

9. The device of any one of claims 1 through 8, wherein the mid-point between said intersections is detected as being representative of said position of a touch.

10. The device of any one of the preceding claims, further comprising

    means (104) for detecting, based on the interval between two successive intersections between said attenuation waveform and said threshold level the width, in said second direction, of a touch of said surface, and means (105) responsive to the detected width for distinguishing from each other a plurality of touch input devices each having a different contact surface size and for putting out respective operation mode signals.

11. The device of any one of the preceding claims wherein said touch input device includes at least a touch pen (13) having a contact tip made of a porous member that carries a clear or colored quick-drying liquid ink.

12. A method of generating an input signal for an electronic information processing device by means of a touch panel input device having a panel (1) with a surface capable of propagating surface acoustic waves, such that a touch of the surface by a touch input device (12, 13) causes perturbation in the form of at least a partial absorption of energy of a surface wave propagating through the region of the touch, surface acoustic wave scanning means (7, 2, 20, 22) for scanning said surface with a timed succession of surface waves directed along parallel paths across said surface in at least one predetermined first direction, receiving means (3-6, 21, 23) for receiving said surface waves after having crossed said surface and for converting the received waves into an electrical signal whose amplitude variation represents the energy absorption state along each of said parallel paths, and signal processing means (7-9) for detecting the position of a touch of said surface in a second direction substantially perpendicular to said first direction, based on said amplitude variation,
    the method comprising the steps of:

    (a) obtaining said electric signal under the condition of no touch of said panel, and storing the signal as reference signal,
    (b) obtaining said electric signal under the condition of touch of said panel,
    (c) generating an attenuation waveform representing the amplitude difference between the signal obtained in step (b) and the signal stored in step (a), and

(d) comparing the attenuation waveform with a specified threshold level,

the method being characterized by the steps of:

(d') generating a corrected attenuation waveform by linearizing the parts of said attenuation waveform that are near said threshold level,
(e) finding two successive intersections of said corrected attenuation waveform with said threshold level,
(f) calculating the interval between the start of the signal obtained in step (b) and a point between said two intersections, and
(g) putting out as said input signal a position signal representing the result obtained in step (f).

13. The method of claim 12, wherein

step (a) comprises sampling the electrical signal at equidistant sampling points to obtain a sequence of reference samples each representing the energy absorption state along a respective one of said parallel paths and storing the reference samples,
step (b) comprises sampling the electrical signal at the same sampling points as in step (a) to obtain a sequence of samples each representing the energy absorption state along a respective one of said parallel paths and storing the samples, and
step (c) comprises generating, as said attenuation waveform, for each of said sampling points the difference between the samples obtained in steps (a) and (b).

14. The method of claim 13 wherein in steps (b) and (c) the samples are quantized and stored as digital values.

15. The method of claim 13 or 14, wherein step (d) comprises

(d1) comparing each of the differences obtained in step (c) with said threshold level.
(d2) finding at least two groups of three successive sampling points, each group including a pair of successive sampling points of which said difference at one sampling point is smaller and that at the other is greater than said threshold level, and
(d3) performing said linearizing by calculating, based on the differences corresponding to each of said groups of sampling points, respective approximation curve segments.

16. The method of claim 15 wherein step (d2) comprises taking as the third sampling point in a group the one next to that one of said pair of sampling points at which said difference is nearer to the threshold level than that of the other of the pair.

17. The method of any one of claims 12 to 16 wherein step (f) comprises determining the interval between the start of the signal obtained in step (b) and the point corresponding to the mid-point between said two intersections.

18. The method of any one of claims 13 to 17, wherein step (c) further comprises dividing each of said differences by the respective reference sample.

19. The method of any one of claims 13 to 18, wherein the interval in step (f) is determined in units of a fraction of the interval between two successive sampling points.

20. The method of any one of claims 12 to 19, wherein step (g) comprises putting out as said input signal a position signal representing said interval between the start of the signal obtained in step (b) and a point between said two intersections, and an operation mode signal representing the interval between said two intersections.

**Patentansprüche**

1. Berührungstafeleingabevorrichtung, umfassend:

eine Tafel (1) mit einer Oberfläche, auf der sich Oberflächenschallwellen ausbreiten können, so daß eine Berührung der Oberfläche durch eine Berührungseingabevorrichtung (12, 13) eine Störung in Form zumindest einer teilweisen Absorption von Energie einer sich durch den Bereich der Berührung ausbreitenden Oberflächenwelle bewirkt,
eine Oberflächenschallwellen-Abtastanordnung (7, 2, 20, 22) zum Abtasten der Oberfläche mit einer zeitlichen Folge von Oberflächenwellen, die längs paralleler Wege über die Oberfläche in zumindest einer vorbestimmten ersten Richtung gerichtet sind,
eine Empfangsanordnung (3-6, 21, 23) zum Empfangen der Oberflächenwellen, nachdem diese die Oberfläche durchlaufen haben, und zum Umsetzen der empfangenen Wellen in ein elektrisches Signal, dessen Amplitudenvariation den Energieabsorptionszustand längs der einzelnen der parallelen Wege repräsentiert,
eine Signalverarbeitungsanordnung (7-9) zum Erfassen der Position einer Berührung der Oberfläche in einer zur ersten Richtung im wesentlichen senkrechten zweiten Richtung auf der Basis des Amplitudenvariationssignals, wobei die Signalverarbeitungsanordnung (7-9) eine Vergleichsanordnung (203) aufweist zum Ableiten, als eine Dämpfungswellenform, der Amplitudendifferenz zwischen einem elektrischen Referenzsignal, das aus der Empfangsanordnung (3-6, 21, 23) erhalten wird, wenn die Tafel (1) nicht berührt wird, und dem elektrischen Signal, das aus der Empfangsanordnung erhalten wird, wenn die Tafel berührt wird, und eine Schwellenwertanordnung zum Vergleichen der Dämpfungswellenform mit einem vorbestimmten Schwellenwertpegel,

**dadurch gekennzeichnet**, daß die Signalverarbeitungsanordnung des weiteren aufweist:

eine auf die Schwellenwertanordnung ansprechende Schnittpunkterfassungsanordnung zum Erfassen von Schnittpunkten zwischen der Dämpfungswellenform und dem Schwellenwertpegel, und
eine auf die Schnittpunkterfassungsanordnung ansprechende Anordnung zum Berechnen eines zwischen den Schnittpunkten liegenden Zeitpunkts, der für die Position einer Berührung repräsentativ ist.

2. Vorrichtung nach Anspruch 1, bei der die Empfangsanordnung eine Abtastanordnung (6) zum Abtasten des elektrischen Signals an äquidistanten Abtastpunkten umfaßt, um eine Sequenz von Abtastwerten zu erhalten, die jeweils den Energieabsorptionszustand auf einem jeweiligen der Wege repräsentieren.

3. Vorrichtung nach Anspruch 2, ferner umfassend eine Anordnung (6) zum Umsetzen jedes Abtastwerts in einen Digitalwert.

4. Vorrichtung nach einem der Ansprüche 1 bis 3, ferner umfassend:

eine Linearisierungsanordnung (206, 208) zum Linearisieren jener Teile der Dämpfungswellenform, die den Schwellenwertpegel schneiden, wobei der Zeitpunkt auf der Basis der Schnittpunkte zwischen der linearisierten Dämpfungswellenform und dem Schwellenwertpegel berechnet wird.

5. Vorrichtung nach Anspruch 4 in Kombination mit Anspruch 2 oder 3, bei der die Vergleichsanordnung (203) ausgebildet ist, um als die Dämpfungswellenform für jeden der Abtastpunkte die Differenz zwischen einem Referenzabtastwert, der aus der Empfangsanordnung erhalten wird, wenn die Tafel (1) nicht berührt wird, und dem entsprechenden Abtastwert, der aus der Empfangsanordnung erhalten wird, wenn die Tafel berührt wird, zu berechnen, um eine Folge von Dämpfungswerten zu erhalten.

6. Vorrichtung nach Anspruch 5, bei der die Vergleichsanordnung (203) ausgebildet ist, um eine Folge von normierten Dämpfungswerten zu berechnen, indem für jeden Abtastpunkt die Differenz zwischen dem Abtastwert und dem entsprechenden Referenzabtastwert gebildet und die Differenz durch den Referenzabtastwert dividiert wird.

7. Vorrichtung nach Anspruch 5 oder 6, bei der die Linearisierungsanordnung aufweist

eine Anordnung (206) zum Vergleichen der einzelnen Dämpfungswerte mit dem Schwellenwertpegel,
eine Anordnung (206) zum Auffinden zumindest zweier Gruppen von drei aufeinanderfolgenden Abtastpunkten, wobei jede Gruppe ein Paar aufeinanderfolgender Abtastpunkte enthält, von denen der Dämpfungswert an einem Abtastpunkt kleiner und derjenige am anderen größer als der Schwellenwertpegel ist, und
eine Anordnung (208) zum Berechnen, auf der Basis der Dämpfungswerte entsprechend den einzelnen Gruppen von Abtastpunkten, jeweiliger Approximationskurvensegmente.

8. Vorrichtung nach Anspruch 7, bei der derjenige Abtastpunkt, der demjenigen des Paars von Abtastpunkten am nächsten ist, an dem der Dämpfungswert näher am Schwellenwertpegel liegt als derjenige des anderen des Paars, als der dritte Abtastpunkt in einer Gruppe ausgewählt wird.

9. Vorrichtung nach einem der Ansprüche 1 bis 8, bei der der Mittenpunkt zwischen den Schnittpunkten als repräsentativ für die Position einer Berührung erfaßt wird.

10. Vorrichtung nach einem der vorhergehenden Ansprüche, ferner umfassend

eine Anordnung (104) zum Erfassen, auf der Basis des Intervalls zwischen zwei aufeinanderfolgenden Schnittpunkten zwischen der Dämpfungswellenform und dem Schwellenwertpegel, der Breite, in der zweiten Richtung, einer Berührung der Oberfläche, und
eine Anordnung (105), die auf die erfaßte Breite anspricht, um eine Mehrzahl von Berührungseingabevorrichtungen, die jeweils eine andere Größe der Kontaktflächen aufweisen, voneinander zu unterscheiden und um jeweilige Betriebsmodussignale auszugeben.

**11.** Vorrichtung nach einem der vorhergehenden Ansprüche, bei der die Berührungseingabevorrichtung zumindest einen Berührungsstift (13) mit einer Kontaktspitze aufweist, die aus einem porösen Element hergestellt ist, welches eine klare oder farbige schnell trocknende flüssige Tinte trägt.

**12.** Verfahren zum Erzeugen eines Eingangssignals für eine elektronische Informationsverarbeitungsvorrichtung mittels einer Berührungstafeleingabevorrichtung, die umfaßt: eine Tafel (1) mit einer Oberfläche, auf der sich Oberflächenschallwellen ausbreiten können, so daß eine Berührung der Oberfläche durch eine Berührungseingabevorrichtung (12, 13) eine Störung in Form zumindest einer teilweisen Absorption von Energie einer sich durch den Bereich der Berührung ausbreitenden Oberflächenwelle bewirkt, eine Oberflächenschallwellen-Abtastanordnung (7, 2, 20, 22) zum Abtasten der Oberfläche mit einer zeitlichen Folge von Oberflächenwellen, die längs paralleler Wege über die Oberfläche in zumindest einer vorbestimmten ersten Richtung gerichtet sind, eine Empfangsanordnung (3-6, 21, 23) zum Empfangen der Oberflächenwellen, nachdem diese die Oberfläche durchlaufen haben, und zum Umsetzen der empfangenen Wellen in ein elektrisches Signal, dessen Amplitudenvariation den Energieabsorptionszustand längs der einzelnen der parallelen Wege repräsentiert, und eine Signalverarbeitungsanordnung (7-9) zum Erfassen der Position einer Berührung der Oberfläche in einer zur ersten Richtung im wesentlichen senkrechten zweiten Richtung auf der Basis der Amplitudenvariation,

wobei das Verfahren folgende Schritte aufweist:

(a) Gewinnen des elektrischen Signals in dem Zustand, daß keine Berührung der Tafel erfolgt, und Speichern des Signals als Referenzsignal,
(b) Gewinnen des elektrischen Signals in dem Zustand, daß eine Berührung der Tafel erfolgt,
(c) Erzeugen einer Dämpfungswellenform, die die Amplitudendifferenz zwischen dem in Schritt (b) gewonnenen Signal und dem in Schritt (a) gespeicherten Signal repräsentiert, und
(d) Vergleichen der Dämpfungswellenform mit einem spezifizierten Schwellenwertpegel,

wobei das Verfahren durch folgende Schritte gekennzeichnet ist:

(d') Erzeugen einer korrigierten Dämpfungswellenform durch Linearisieren der Teile der Dämpfungswellenform, die nahe dem Schwellenwertpegel sind,
(e) Auffinden zweier aufeinanderfolgender Schnittpunkte der korrigierten Dämpfungswellenform mit dem Schwellenwertpegel,
(f) Berechnen des Intervalls zwischen dem Beginn des in Schritt (b) gewonnenen Signals und einem Punkt zwischen den zwei Schnittpunkten, und
(g) Ausgeben eines das in Schritt (f) gewonnene Ergebnis repräsentierenden Positionssignals als das Eingangssignal.

**13.** Verfahren nach Anspruch 12, bei dem

Schritt (a) das Abtasten des elektrischen Signals an äquidistanten Abtastpunkten zum Gewinnen einer Folge von Referenzabtastwerten, die jeweils den Energieabsorptionszustand längs eines jeweiligen der parallelen Wege repräsentieren, und das Speichern der Referenzabtastwerte umfaßt,
Schritt (b) das Abtasten des elektrischen Signals an denselben Abtastpunkten wie im Schritt (a) zum Gewinnen einer Folge von Abtastwerten, die jeweils den Energieabsorptionszustand längs eines jeweiligen der parallelen Wege repräsentieren, und das Speichern der Abtastwerte umfaßt, und
Schritt (c) das Erzeugen der Differenz zwischen den in den Schritten (a) und (b) gewonnenen Abtastwerten für jeden der Abtastpunkte als die Dämpfungswellenform umfaßt.

**14.** Verfahren nach Anspruch 13, bei dem in den Schritten (b) und (c) die Abtastwerte quantisiert und als Digitalwerte gespeichert werden.

**15.** Verfahren nach Anspruch 13 oder 14, bei dem Schritt (d) umfaßt

(d1) Vergleichen jeder der in Schritt (c) gewonnenen Differenzen mit dem Schwellenwertpegel,
(d2) Auffinden zumindest zweier Gruppen von drei aufeinanderfolgenden Abtastpunkten, wobei jede Gruppe ein Paar aufeinanderfolgender Abtastpunkte umfaßt, von denen die Differenz an einem Abtastpunkt kleiner und diejenige am anderen größer als der Schwellenwertpegel ist, und
(d3) Ausführen der Linearisierung durch Berechnen, auf der Basis der Differenzen entsprechend den einzelnen Gruppen von Abtastpunkten, jeweiliger Approximationskurvensegmente.

**16.** Verfahren nach Anspruch 15, bei dem Schritt (d2) umfaßt, als den dritten Abtastpunkt in einer Gruppe denjenigen zu nehmen, der demjenigen des Paars von Abtastpunkten am nächsten ist, an dem die Differenz näher am Schwellenwertpegel liegt als die des anderen des Paars.

17. Verfahren nach einem der Ansprüche 12 bis 16, bei dem Schritt (f) das Bestimmen des Intervalls zwischen dem Beginn des in Schritt (b) gewonnenen Signals und dem Punkt entsprechend dem Mittenpunkt zwischen den zwei Schnittpunkten umfaßt.

18. Verfahren nach einem der Ansprüche 13 bis 17, bei dem Schritt (c) ferner umfaßt, jede der Differenzen durch den jeweiligen Referenzabtastwert zu dividieren.

19. Verfahren nach einem der Ansprüche 13 bis 18, bei dem das Intervall in Schritt (f) in Einheiten eines Bruchteils des Intervalls zwischen zwei aufeinanderfolgenden Abtastpunkten bestimmt wird.

20. Verfahren nach einem der Ansprüche 12 bis 19, bei dem Schritt (g) umfaßt, als das Eingabesignal ein Positionssignal, das das Intervall zwischen dem Beginn des in Schritt (b) gewonnenen Signals und einem Punkt zwischen den zwei Schnittpunkten repräsentiert, und ein Betriebsmodussignal auszugeben, das das Intervall zwischen den zwei Schnittpunkten repräsentiert.

## Revendications

1. Dispositif d'entrée à écran tactile, comprenant :

   un écran (1) ayant une surface permettant la propagation d'ondes acoustiques de surface, de telle façon que le fait de toucher la surface au moyen d'un dispositif (12, 13) d'entrée tactile provoque une perturbation sous la forme d'au moins une absorption partielle d'énergie d'une onde de surface se propageant dans la région du toucher,
   des moyens (7, 2, 20, 22) de balayage par ondes acoustiques de surface pour balayer ladite surface d'une succession cadencée d'ondes de surface dirigées suivant des trajets parallèles parcourant ladite surface dans au moins une première direction déterminée à l'avance,
   des moyens (3-6, 21, 23) de réception destinés à recevoir les ondes de surface après qu'elles ont parcouru ladite surface et à convertir les ondes reçues en un signal électrique dont la variation d'amplitude représente l'état d'absorption d'énergie suivant chacun des trajets parallèles, et
   des moyens (7-9) de traitement de signaux pour détecter la position d'un toucher de ladite surface dans une seconde direction sensiblement perpendiculaire à la première direction, sur la base du signal de variation d'amplitude, les moyens (7-9) de traitement de signaux comportant des moyens (203) de comparaison destinés à déterminer, en tant que forme d'onde d'atténuation, la différence d'amplitude entre un signal électrique de référence obtenu par les moyens (3-6, 21, 23) de réception lorsque l'écran (1) n'est pas touché et le signal électrique provenant des moyens de réception lorsque l'écran est touché,
des moyens de seuil destinés à comparer ladite forme d'onde d'atténuation à un niveau de seuil déterminé à l'avance,

   caractérisé en ce que les moyens de traitement de signaux comportent en outre :

   des moyens de détection d'intersection sensibles aux moyens à seuil pour détecter des intersections entre la forme d'onde d'atténuation et le niveau de seuil, et
   des moyens sensibles aux moyens de détection d'intersection pour calculer un instant intermédiaire entre les intersections comme étant représentatif de la position d'un toucher.

2. Dispositif suivant la revendication 1, dans lequel les moyens de réception comprennent des moyens (6) d'échantillonnage destinés à échantillonner le signal électrique en des points d'échantillonnage équidistants afin d'obtenir une séquence d'échantillons représentant chacun l'état d'absorption d'énergie sur l'un respectif des trajets.

3. Dispositif suivant la revendication 2, comprenant en outre des moyens (6) pour convertir chaque échantillon en une valeur numérique.

4. Dispositif suivant l'une quelconque des revendications 1 à 3, comprenant en outre :

   des moyens (206, 208) de linéarisation destinés à linéariser les parties de la forme d'onde d'atténuation qui présentent une intersection avec la valeur de seuil,
   dans lequel l'instant est calculé sur la base des intersections entre la forme d'onde d'atténuation linéarisée et le niveau de seuil.

5. Dispositif suivant la revendication 4, en combinaison avec la revendication 2 ou 3, dans lequel les moyens (203) de comparaison sont conçus pour calculer, en tant que forme d'onde d'atténuation, pour chacun des points d'échantillonnage, la différence entre un échantillon de référence obtenu des moyens de réception lorsque l'écran (1) n'est pas touché, et l'échantillon correspondant obtenu des moyens de réception lorsque l'écran est touché, afin d'obtenir une séquence de valeurs d'atténuation.

6. Dispositif suivant la revendication 5, dans lequel les moyens (203) de comparaison sont conçus pour calculer une séquence de valeurs d'atténuation normalisées en formant, pour chaque point d'échantillonnage, la différence entre l'échantillon et l'échantillon de référence correspondant et en divisant la différence par l'échantillon de référence.

7. Dispositif suivant la revendication 5 ou 6, dans lequel les moyens de linéarisation comprennent :

des moyens (206) pour comparer chacune des valeurs d'atténuation au niveau de seuil,
des moyens (206) pour trouver au moins deux groupes de trois points d'échantillonnage successifs, chaque groupe comportant une paire de points d'échantillonnage successifs parmi lesquels la valeur de l'atténuation en un point d'échantillonnage est plus faible et celle trouvée en l'autre point est plus élevée que le niveau de seuil, et
des moyens (208) destinés à calculer, sur la base des valeurs d'atténuation correspondant à chacun des groupes de points d'échantillonnage, des segments de courbe d'approximation respectifs.

8. Dispositif suivant la revendication 7, dans lequel le point d'échantillonnage faisant suite à celui de la paire de points d'échantillonnage auquel la valeur d'atténuation est plus proche du niveau de seuil que celle de l'autre point de la paire, est sélectionné comme étant le troisième point d'échantillonage d'un groupe.

9. Dispositif suivant l'une quelconque des revendications 1 à 8, dans lequel le point médian entre les intersections est détecté comme étant représentatif de la position d'un toucher.

10. Dispositif suivant l'une quelconque des revendications précédentes, comprenant en outre :

des moyens (104) pour détecter, sur la base de l'intervalle entre deux intersections successives entre la forme d'onde d'atténuation et le niveau de seuil la largeur, dans la seconde direction, d'un toucher de la surface, et
des moyens (105) sensibles à la largeur détectée pour distinguer les uns des autres une pluralité de dispositifs d'entrée tactile ayant chacun une taille de surface de contact différente et destinés à fournir en sortie des signaux de mode de fonctionnement respectifs.

11. Dispositif suivant l'une quelconque des revendications précédentes, dans lequel le dispositif d'entrée tactile comporte au moins un stylet (13) tactile ayant une pointe de contact faite d'un élément poreux qui transporte une encre liquide limpide ou colorée à séchage rapide.

12. Procédé de production d'un signal d'entrée pour un dispositif de traitement d'information électronique au moyen d'un dispositif (12, 13) d'entrée à écran tactile ayant un écran (1) muni d'une surface permettant la propagation d'ondes acoustiques de surface, de telle façon que le fait de toucher la surface au moyen d'un dispositif d'entrée tactile provoque une perturbation sous la forme d'au moins une absorption partielle d'énergie d'une onde de surface se propageant à travers la région du toucher, des moyens (7, 2, 20, 22) de balayage par des ondes acoustiques de surface pour balayer la surface avec une succession cadencée d'ondes de surface dirigées suivant des trajets parallèles parcourant la surface dans au moins une première direction déterminée à l'avance, des moyens (3-6, 21, 23) de réception destinés à recevoir les ondes acoustiques de surface après qu'elles ont parcouru la surface et à convertir les ondes reçues en un signal électrique dont la variation d'amplitude représente l'état d'absorption d'énergie suivant chacun des trajets parallèles, et des moyens (7-9) de traitement de signaux pour détecter la position d'un toucher de la surface dans une seconde direction sensiblement perpendiculaire à la première direction, sur la base de la variation d'amplitude, le procédé comprenant les étapes :

(a) d'obtention du signal électrique en l'absence de toucher de l'écran, et de stockage du signal en tant que signal de référence,
(b) d'obtention du signal électrique dans un état dans lequel l'écran est touché, et
(c) de génération d'une forme d'onde d'atténuation représentant la différence d'amplitude entre le signal obtenu lors de l'étape (b) et le signal stocké lors de l'étape (a),
(d) de comparaison de la forme d'onde d'atténuation avec un niveau de seuil précisé,

le procédé étant caractérisé par les étapes :

(d') de génération d'une forme d'onde d'atténuation corrigée en linéarisant les parties de la forme d'onde d'atténuation qui sont proches du niveau de seuil,
(e) de recherche de deux intersections successives de la forme d'onde d'atténuation corrigée avec le niveau de seuil,
(f) de calcul de l'intervalle entre le début du signal obtenu lors de l'étape (b) et un point situé entre les deux intersections, et

(g) de fourniture en sortie en tant que signal d'entrée d'un signal de position représentant le résultat obtenu lors de l'étape (f).

13. Procédé suivant la revendication 12, dans lequel :

l'étape (a) comprend l'échantillonnage du signal électrique à des points d'échantillonnage équidistants pour obtenir une séquence d'échantillons de référence représentant chacun l'état d'absorption d'énergie suivant l'un respectif des trajets parallèles et le stockage des échantillons de référence,

l'étape (b) comprend l'échantillonnage du signal électrique aux mêmes points d'échantillonnage que lors de l'étape (a) pour obtenir une séquence d'échantillons représentant chacun l'état d'absorption d'énergie suivant l'un respectif des trajets parallèles, et le stockage des échantillons, et

l'étape (c) comprend la génération, en tant que forme d'onde d'atténuation, pour chacun des points d'échantillonnage, de la différence entre les échantillons obtenus lors des étapes (a) et (b).

14. Procédé suivant la revendication 13, dans lequel, lors des étapes (b) et (c), les échantillons sont quantifiés et stockés sous forme de valeurs numériques.

15. Procédé suivant la revendication 13 ou 14, dans lequel l'étape (d) comprend :

(d1) la comparaison de chacune des différences obtenues lors de l'étape (c) avec le niveau de seuil ;

(d2) la recherche d'au moins deux groupes de trois points d'échantillonnage successifs, chaque groupe contenant une paire de points d'échantillonnage successifs pour lesquels la différence en un point d'échantillonnage est plus faible que le niveau de seuil et celle trouvée en l'autre point d'échantillonnage est plus élevée que le niveau de seuil, et

(d3) la réalisation de la linéarisation par calcul, sur la base des différences correspondant à chacun des groupes de points d'échantillonnage, de segments de courbe d'approximation respectifs.

16. Procédé suivant la revendication 15, dans lequel l'étape (d2) comprend l'utilisation en tant que troisième point d'échantillonnage d'un groupe, du point qui fait suite au point, de la paire de points d'échantillonnage pour lequel la différence est plus proche du niveau de seuil que celle de l'autre point de la paire.

17. Procédé suivant l'une quelconque des revendications 12 à 16, dans lequel l'étape (f) comprend la détermination de l'intervalle entre le début du signal obtenu lors de l'étape (b) et le point correspondant au point médian entre les deux intersections.

18. Procédé suivant l'une quelconque des revendications 13 à 17, dans lequel l'étape (c) comprend en outre la division de chacune des différences par l'échantillon de référence respectif.

19. Procédé suivant l'une quelconque des revendications 13 à 18, dans lequel l'intervalle utilisé dans l'étape (f) est déterminé en unités égales à une fraction de l'intervalle entre deux points d'échantillonnage successifs.

20. Procédé suivant l'une quelconque des revendications 12 à 19, dans lequel l'étape (g) comprend la fourniture en sortie en tant que signal d'entrée, d'un signal de position représentant l'intervalle entre le début du signal obtenu lors de l'étape (b) et un point situé entre les deux intersections, et d'un signal de mode de fonctionnement représentant l'intervalle entre les deux intersections.

FIG. 1

EP 0 657 842 B1

FIG. 2

201

| Reference<br>wave form<br>input means |
|---|

202

| Touch<br>wave form<br>input means |
|---|

203

| Comparison<br>means |
|---|

206

| Sampling<br>point<br>selection<br>means |
|---|

208

| Calculation<br>means |
|---|

210

| Width data<br>output<br>means |
|---|

FIG. 3

Amplitude/sample
value

Sampling interval t

Time T

## FIG. 4

Amplitude/sample
value

Sampling interval t

Time T

## FIG. 5

NA

Threshold level

Sampling interval t

Time T

## FIG. 6

FIG. 7

FIG. 8

FIG. 9

( a )

Data storage

Touch panel controller

R A M

9

C P U

7

Print controller

Data transmission

Printer

27

38

( b )

FIG. 10

FIG. 11

FIG. 12

FIG. 13

FIG. 14